# EUROPEAN PATENT APPLICATION

(11) **EP 4 435 745 A1**
(43) Date of publication of application: **25.09.2024**
(21) Application number: 23163698.6
(22) Date of filing: 23.03.2023
(51) Int. Cl.: G06V 40/20, G06V 10/82, G06V 40/10, G06V 10/75

(54) **MONITORING A USER ACTIVITY**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A method for automatically monitoring performance of an activity by a user in an accurate way and without the presence of a third party or the requirement of professional intervention is described. A human-pose estimation model is used to determine actual joint locations of the user from image frames of a received video stream. A classification model is used to determine an activity that is being performed by the user based on the at least one joint location. A template corresponding to the activity being performed by the user is retrieved and a score calculated indicating the quality of the performance of the activity by the user based on the template and the actual joint locations of the user.

## Description

The present disclosure relates to methods and systems for automatically monitoring an activity by a user.

### BACKGROUND

A user is often assigned such as by a healthcare professional or instructor the performance of an activity such as an exercise as part of a recovery program from an injury or such as a movement as part of a choreography.

Determining whether a user is performing an activity correctly is useful such as for ensuring the optimal recovery period of a user or the learning of choreography without developing negative habits, and can facilitate the performing of the activity by the user such as facilitating the informing the user of when they have performed an activity correctly or not.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology comprises a method for monitoring an activity by a user, comprising:
receiving a video stream comprising a plurality of image frames, the video stream depicting at least a portion of the user;
using a human-pose estimation model to output at least one joint location of the user from each image frame of a first selection of image frames of the plurality of image frames;
using a classification model to classify a user activity defined at least in part by at least one joint location over a second selection of image frames as one of a plurality of classified activities;
retrieving a template corresponding to the classified activity, wherein the template defines at least one correct parameter during the classified activity of at least one joint corresponding to the at least one joint location output by the human-pose estimation model; and
calculating a score indicating the quality of the performance of the classified activity by the user, wherein the quality of the performance of the classified activity is determined from the difference between the at least one correct parameter of the at least one joint defined by the template and at least one corresponding actual parameter of the at least one joint of the user over the second selection of image frames.

In this way, a method is provided for automatically monitoring performance of an activity by a user in an accurate, quantifiable way by taking into account characteristics of a user performance of the activity that are not necessarily accurately perceivable by a human observer, and without the presence of a third party or the requirement of professional intervention.

In one preferred embodiment, the classification model is a neural network that is trained on training data comprising each activity of the plurality of classified activities, wherein each activity of the plurality of classified activities is defined at least in part by at least one joint location, such that that the neural network, once trained, classifies a user activity defined at least in part by at least one joint location as one of the plurality of classified activities. In this way, the retrieval of a template that accurately reflects the true activity performed by the user is facilitated, alongside the scoring of individual activities of a compound activity without requiring an explicit signal of the start and/or end of an activity, in various examples.

In one preferred embodiment, the second selection of image frames is one of: the first selection of image frames; a selection of image frames between the detection of a first user gesture from the at least one joint location of the user indicating the start of an activity and a second user gesture from the at least one joint location of the user indicating the end of an activity; a selection of image frames corresponding to times between a time of detection of a first audio signal indicating the start of an activity and a time of detection of a second audio signal indicating the end of an activity. In this way, the choice of the second selection of image frames allows the reduction in the risk of a misclassification due to a position of a user not corresponding to an activity being included in the positions used to classify the activity of the user, thereby further improving the accuracy of the monitoring of user performance.

In one preferred embodiment, calculating the score indicating the quality of the performance of the classified activity comprises:
obtaining the frame rate of the received video stream;
determining a speed or intensity of the classified activity performed by the user from the frame rate of the received video stream and the at least one joint location of the user output by the human-pose estimation model during the classified activity; and
calculating a score indicating the similarity between the speed or intensity of the classified activity performed by the user and a speed or intensity of the activity defined by the template.

In this way, the score provides a more accurate metric of the quality of the user performance of the activity that takes into account speed and/or intensity, which are not accurately perceivable by a human observer and which in various examples significantly impact the benefits and/or risks of the activity to the user.

In one preferred embodiment, the at least one joint location of the user is a plurality of joint locations of the user, and wherein calculating the score indicating the quality of the performance of the classified activity comprises:
calculating at least one angle at a joint location of the plurality of joint locations of the user during the classified activity; and
calculating a score indicating the similarity between the at least one angle at a joint location of the user and a corresponding angle defined by the template.

In this way, the score provides a more accurate metric of the quality of the user performance of the activity that takes into account angle at a joint, which is not accurately perceivable by a human observer and which in various examples significantly impacts the benefits and/or risks of the activity to the user.

In one preferred embodiment, the method further comprises using the score to provide substantially real-time feedback to the user instructing the user how to perform the classified activity to replicate the activity defined by the template. In this way, the method is used to provide accurate instruction, taking into account factors that are not necessarily accurately perceivable by a human observer, which lowers the risk of injury to the user when they are performing an activity, In various examples.

In one preferred embodiment, the user is a first user, wherein the at least one classified activity and the corresponding template are predefined, and wherein predefining the corresponding template comprises, for each of the at least one classified activity:
video recording the classified activity during correct performance of the classified activity by a second user;
using a human-pose estimation model to obtain from the video recording at least one joint location of the second user over the duration of the classified activity; and
generating a template comprising at least one correct parameter of the at least one joint corresponding to the at least one joint location of the second user, over the duration of the classified activity.

In this way, a template activity that reflects metrics which are not necessarily accurately perceivable by a human observer is provided, which facilitates the performing of and the beneficial effects provided by the method.

In one preferred embodiment, the at least one actual parameter of the at least one joint of the user and the at least one correct parameter of the at least one joint defined by the template comprise one or more of: an angle at any of the at least one joint; a speed of any of the least one joint; a relative location of any of the at least one joint. In this way, the quality of the performance of the activity by the user determined by the method uses and takes into account metric which are not accurately perceivable by a human observer.

In one preferred embodiment, the classification model is one of:
a neural network that has undergone supervised training on training data comprising each activity of the plurality of classified activities, wherein each activity of the plurality of classified activities is defined at least in part by at least one joint location, such that that the neural network, once trained, classifies a user activity defined at least in part by at least one joint location as one of the plurality of classified activities;
at least one rule defining when an activity defined at least in part by at least one joint location should be classified as a specific classified activity of the plurality of classified activities.

In this way, the retrieval of a template that accurately reflects the true activity performed by the user is facilitated.

In one preferred embodiment, the method further comprises:
providing instruction to the user to attempt a first activity prior to using the classification model during a user attempt of the first activity;
after obtaining the score, providing instruction to the user to attempt a second activity, wherein the second activity has an increased difficulty compared to the first activity where the score indicates a difference between the correct and corresponding actual parameters that is below a predefined threshold, and wherein the second activity has a decreased difficulty where the score indicates a difference between the correct and corresponding actual parameters that is above a predefined threshold.

In this way, the risk of injury to the user is automatically lowered using a score based on factors that are not necessarily accurately perceivable by a human observer, whilst allowing, in various examples, the acceleration of a recovery period and/or quality of recovery of the user by automatically instructing the performing of harder activities.

In one preferred embodiment, the method further comprises:
providing instruction to the user to attempt a first activity prior to using the classification model during a user attempt of the first activity;
   receiving an indication of the state of the user; and
   providing instruction to the user to attempt a second activity with a
decreased difficulty compared to the first activity where it is determined that the state of the user should be improved.

In this way, the risk of injury to the user is automatically lowered using a state of the user that is not necessarily accurately perceivable by a human observer.

In one preferred embodiment, the indication of the state of the user comprises one or more of: audio in which the user expresses pain; audio in which the user expresses discomfort; user self-reporting information in which the user expresses pain; user self-reporting information in which the user expresses discomfort; a heat map of the user from a heat sensor; the temperature of the user from a temperature sensor.

In one preferred embodiment, the method further comprises storing only the correct and corresponding actual parameters of the at least one joint and the score indicating the quality of the performance of the classified activity by the user for secure access and offline evaluation by a healthcare professional, wherein the received video stream is discarded once it is no longer used in the method. In this way, the security of the method and user data is improved whilst facilitating offline analysis and retaining the beneficial effects of the method.

A second aspect of the disclosed technology comprises an apparatus for monitoring an activity by a user, the apparatus comprising:
at least one processor;
at least one memory storing instructions that, when executed by the at least one processor, perform a method for monitoring an activity by a user, comprising:
   receiving a video stream comprising a plurality of image frames, the video stream depicting at least a portion of the user;
   using a human-pose estimation model to output at least one joint location of the user from each image frame of a first selection of image frames of the plurality of image frames;
   using a classification model to classify a user activity defined at least in part by at least one joint location over a second selection of image frames as one of a plurality of classified activities;
   retrieving a template corresponding to the classified activity, wherein the template defines correct parameters during the classified activity of at least one joint corresponding to the at least one joint location output by the human-pose estimation model; and
   calculating a score indicating the quality of the performance of the classified activity by the user, wherein the quality of the performance of the classified activity is determined from the difference between the correct parameters of the at least one joint defined by the template and corresponding actual parameters of the at least one joint of the user.

In this way, an apparatus automatically monitors performance of an activity by a user in an accurate, quantifiable way by taking into account characteristics of a user performance of the activity that are not necessarily accurately perceivable by a human observer, and without the presence of a third party or the requirement of professional intervention.

A third aspect of the disclosed technology comprises at least one computer-readable media having computer-executable instructions, which when executed, perform the methods described herein.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

FIG. 1 illustrates a method for monitoring an activity by a user;
FIG. 2 is a flow diagram illustrating calculation of a score indicating the quality of the performance of a classified activity, according to various examples;
FIG. 3 illustrates the provision of substantially real-time feedback to the user, according to various examples;
FIG. 4A is a flow diagram illustrating the training of a neural network to classify a user activity, in various examples, and FIG. 4B illustrates the process of classification using a classification model such as that trained via the method of FIG. 4A, in various examples;
FIG. 5 is a flow chart describing various examples of the provision of instruction to a user that are, in various examples, incorporated into the methods described herein;
FIG. 6 illustrates an exemplary computing-based device in which examples of an activity facilitation component for facilitating the performing of an activity by a user are implemented.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

It is often useful, such as in scenarios where a user is prescribed by a healthcare professional an activity such as an exercise to perform as part of a recovery program, to determine whether or not the user is performing the activity correctly, and thereby facilitate the performing of the activity by the user.

The inventors recognize that there are a number of challenges associated with typical situations wherein a user is instructed by a healthcare professional how to perform an activity and then must perform the activity independently during a prescribed recovery period. The first of these challenges is that a user may or may not follow the instructions of the healthcare professional accurately over the entire course of the recovery period, which can significantly lengthen the time needed for recovery or, in some cases, result in additional injury. The second of these challenges is that a healthcare professional, in some cases, is unable to accurately determine whether the user is performing an activity correctly and/or how to accurately instruct the user to perform the activity correctly. It should be appreciated that the context of a healthcare professional and a recovery period is merely exemplary, and is not limiting. In various examples, a context in which a user is instructed by a coach to perform a sport-related movement such as a golf swing during a training period is relevant, wherein the above described challenges also apply.

One approach to checking that a user is following the instructions of the healthcare professional accurately and/or is performing the activity correctly is to record the user performing the activity and provide either a video stream or a stored video to a healthcare professional, who manually reviews the video and decides whether or not the user is performing the activity correctly. However, this approach is time and resource intensive, increases the strain placed on healthcare providers, and a healthcare professional may not be able to accurately determine whether the user is performing the activity correctly from the video stream. Additionally, reviews may only be conducted over a subset of the times that a user is performing an activity during their recovery period, which could mean that an activity that has been reviewed and deemed correct has not or will not be performed correctly by the user on other occasions.

The technology described herein uses a human-pose estimation model to determine joint locations of at least one joint of a user from a video stream depicting at least a portion of the user. A human-pose estimation model is a computational model that is designed to predict at least the locations of a joint of a person from an image. A non-exhaustive list of examples of human-pose estimation models which may be used is: OpenPose (trade mark), AlphaPose (trade mark), DeepCut (trade mark). In various examples, each location of a joint of a person corresponds to one of: a two-dimensional vector (x,y) describing the distance in pixels, metres, centimetres or another distance metric of the joint relative to a point along an x-axis (x) and along a y-axis (y), wherein the point is in various examples the lowest left-most point of the image; a three-dimensional vector (x,y,z) describing the distance of the joint relative to a point along an x-axis (x), along a y-axis (y) and along a z-axis (z), wherein the point is in various examples the lowest left-most point of the image with a z-axis (z) value of 0. It should be appreciated that the choice of point from which to determine relative distances can be any point, and that, additionally, a polar coordinate or other location metric is, in various examples, used to define the location of a joint of the person.

A video stream is a continuous flow of image frames received from a video source. Such a source, in various examples, is one of: a video camera; a video stored on a storage device. The video stream, in various examples, has a frame rate of 24, 60 or any other value of frames per second, which corresponds to the number of frames comprised in a video with a duration of one-second. It should be appreciated that the frame rate of the video stream, in various examples, remains constant over the entire video stream, and that alternatively, in various examples, the frame rate changes over the course of the entire video stream.

Subsequently, the technology described herein uses a classification model, described below, to classify an activity performed by the user using at least the joint locations over one or more frames output by the human-pose estimation model. The classified activity is used to retrieve a template for the classified activity, which is compared to the user performance of the activity in order to calculate a score indicating the quality of the performance of the activity by the user.

Such a score, in the technology described herein, facilitates the performance of the activity by the user by quantifying the activity performed by the user, thereby enabling the accurate determining of whether or not the user is performing the activity correctly, and thereby the facilitation of the performing of the activity. The score, in various examples, is further used by a computing system to provide feedback to the user and/or provide instruction to the user. The score, in various examples, is readable by a human. Alternatively, in various examples, the score is interpretable only by a computing device.

The present technology provides an accurate way to quantify the quality of the performance of an activity by a user, generating a score without requiring the review of a third party such as a healthcare professional, and in a way that facilitates evaluation every time a user performs the activity whilst enabling the provision of real-time feedback, in various examples. In the context of the performing of exercises by a user during a recovery period, the present technology minimises the risk of a prolonged recovery period and the risk of injury to the user. The present technology is fully automated and does not require sensors or markers placed on the body of the user.

Though the present technology is described herein with reference to healthcare contexts and recovery periods, it should be appreciated that the present technology is in no way limited to this context, and is beneficial when applied to a range of situations as noted by the inventors. The inventors have noticed that the present technology, in the context of a user performing a choreographed activity such as a golf swing, baseball swing, or dance move, minimises the risk of injury to the user, facilitates the accurate learning of the choreographed activity without the requirement of the involvement of a third party such as a coach or teacher, and reduces the risk of a prolonged training period.

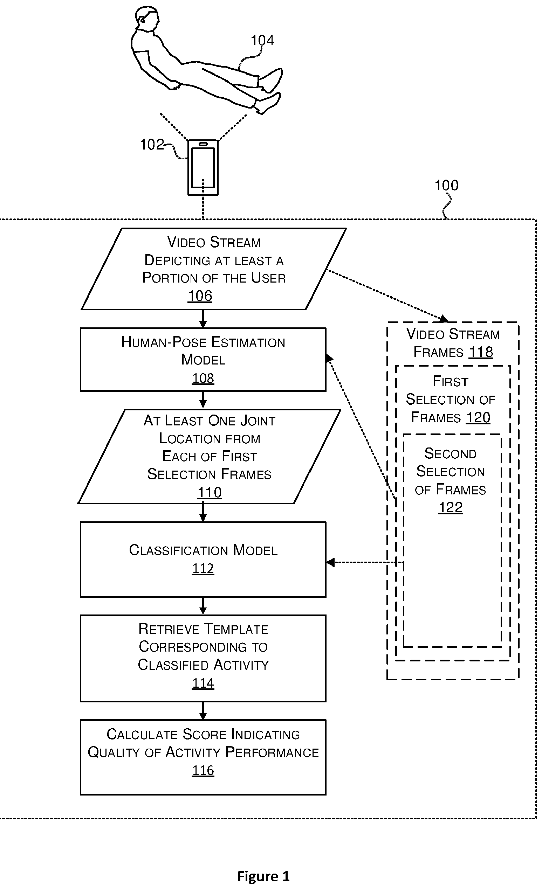

Figure 1 of the accompanying drawings shows a method 100 for facilitating performing of an activity by a user. In various examples, the method 100 is implemented in a computing device 102 such as a mobile phone, tablet, personal computer or other computing device. In various examples, the method 100 is implemented in a cloud computing environment.

In various examples, the computing device 102 has an associated camera or other recording device capable of recording a video stream within a field of view such as the field of view 104. In various examples, the computing device does not have an associated camera and instead receives a video stream that has been recorded elsewhere and transmitted to the computing device 102. In various examples, the computing device 102 retrieves a video stream from a storage.

Block 106 of the method 100 comprises receiving a video stream depicting at least a portion of the user which is to have the performing of an activity facilitated. The video stream comprises a plurality of video stream frames 118 which are image frames. Field of view 104 shows an example frame of the video stream that, in various examples, is received 106.

In various examples, every frame of the plurality of image frames comprised in the video stream depicts at least a portion of the user. In various examples, only a portion of the plurality of image frames comprised in the video stream depicts at least a portion of the user.

A first selection of frames 120 which are image frames comprised in the video stream frames 118 is input to a human-pose estimation model 108. In various examples, the first selection of frames 120 is all image frames of the video stream frames 118. In various examples, the first selection of frames 120 comprises every second, third, fourth or more frame of the video stream frames 118, which is beneficial if, in various examples, pose estimation on fewer frames would not substantially affect the detection of joint locations by the human-pose estimation model 108 over the course of a user movement, such as when user movements are slower than a threshold and the frame rate of the video stream is higher than a threshold. In various examples, the first selection of frames 120 comprises only frames in which the user is at least partially depicted. In various examples, the first selection of frames 120 comprises only frames in which at least a threshold portion of the user is depicted, which is useful if the human-pose estimation model 108 is unable to determine joint locations of the user when less than the threshold portion of the user is depicted in an image frame processed by the human-pose estimation model 108.

Each image frame of the first selection of frames 120 is input into the human-pose estimation model 108, which determines at least one joint location of the user in the input image frame. In various examples, the human-pose estimation model is an existing open-source library. In various non-limiting examples, the existing open-source library is one of: OpenPose (trade mark); BlazePose (trade mark).

By inputting each image frame of the first selection of frames 120 into the human-pose estimation model 108, at least one joint location of the user 110 from each of the first selection of frames 120 is obtained.

The at least one joint location of the user 110 from each of a second selection of frames 122 comprised in the first selection of frames 120 is then input into a classification model 112. The classification model 112 will be elaborated on below, and takes as input an activity defined at least in part by at least one joint location and classifies the activity as one of a plurality of classified activities. In various examples, the classification model 112 takes as input an activity defined at least in part by at least one relative joint location. In various examples, if the classification model is unable to classify an activity with a certainty above a threshold, the classification model will output an indication of its inability to classify the activity. In various examples, this indication is used to provide feedback to the user by instructing the user to perform one of the plurality of classified activities.

In various examples, the input activity defined at least in part by at least one joint location is defined by at least one input joint location and none or more of factors that are implicitly defined by at least one input joint location: at least one relative joint location; at least one angle at a joint; a speed of a joint over the duration of the input activity; an intensity (frequency of repeated movement) of a joint over the duration of the input activity.

In various examples, the input activity defined at least in part by at least one joint location is defined entirely by at least one input joint location. In various examples, only joint locations are input to the classification model 112. In various examples, the input activity is defined by at least one relative joint location. In various examples, relative joint locations are joint locations that are defined relative to other joint locations, such as relative to the parent joint in a kinematic tree of the human body. A kinematic tree of the human body is a hierarchy of connected joints with defined parent and child joints, such as a parent elbow joint and a child wrist joint, wherein a movement of the elbow joint in isolation of a person causes the movement of the wrist joint, but wherein a movement of the wrist joint in isolation does not cause the movement of the elbow joint. In various examples, relative joint locations are joint locations that are defined relative to a specific point, such as one of: the head of a person; the foot of a person; the midpoint of the feet of a person; an object in an environment; a defined point in an environment.

In various examples, the input activity defined at least in part by at least one joint location is defined by at least one angle at a joint, such as an angle at an elbow joint defined by the shoulder-elbow-wrist angle. In various examples, the input activity defined at least in part by at least one joint location is defined by a speed of a joint over a duration of the input activity.

A second selection of frames 122 comprised in the first selection of frames 120 defines selected frames and thereby the joint locations from each of the selected frames that are input to the classification model 112. In various examples, the second selection of frames 122 is one of: the first selection of frames 120; a selection of image frames between the detection of a first user gesture from the at least one joint location of the user indicating the start of an activity and a second user gesture from the at least one joint location of the user indicating the end of an activity; a selection of image frames corresponding to times between a time of detection of a first audio signal indicating the start of an activity and a time of detection of a second audio signal indicating the end of an activity. In various examples, the second selection of frames is determined by the method 100. In various examples, a party external to the method 100 defines the second selection of frames or criteria which are used by the method 100 to define the second selection of frames.

In various examples, the detection of a first user gesture and a second user gesture indicating the start and end of an activity respectively is performed by recognising a gesture using the at least one joint location from each of the first selection of frames 110. In various examples, a rule is implemented which defines a gesture as conditions of the at least one joint location from each of the first selection of frames 110, such as defining a gesture indicating the start of an activity as when a wrist joint is raised above a shoulder joint. It should be appreciated that there are many choices as to how to define and recognise a gesture. In various examples, the recognition of a gesture is performed in substantially real-time on the at least one joint location from each of the first selection of frames 110 prior to input into the classification model 112, as each frame of the first selection of frames 120 is processed by the human-pose estimation model 108 in substantially real-time.

In various examples, the detection of a first audio signal and a second audio signal indicating the start and end of an activity respectively is performed by receiving an audio signal associated with the video stream 106. In various examples, the audio signal is analysed by a speech recognition model to identify when a phrase corresponding to starting or ending an activity is spoken, such as 'I am beginning the activity'. In various examples, once a phrase corresponding to starting or ending an activity is identified, a time of the phrase is determined. In various examples, the time of the phrase is determined from timestamps received with the audio signal associated with the video stream 106. In various examples, the time of the phrase is matched to the time of a frame in the first selection of frames 120. In various examples, the time of the phrase is matched to the timestamp of a frame determined by receiving a frame rate of the video stream 106 and calculating the number of frames since the start of the video stream 106 of a target frame.

In various examples, the second selection of frames is determined such that the selected frames encompass a single activity. In various examples, the video stream 106 depicts at least a portion of the user performing a compound exercise comprising multiple individual movements. In this example, the second selection of frames 122 is made such that only a single individual movement is input to the classification model 112. In various examples, the second selection of frames 122 is the first selection of frames 120 and the at least one joint location from each of the first selection of frames 110 is input into the classification model 112 as soon as the at least one joint location from a frame of the first selection of frames is available, thereby performing the method 100 in substantially real-time.

In the classification model 112, a user activity defined at least in part by the at least one joint location of the user over the second selection of frames 122 is input. In various examples, additional calculations are performed to define the user activity further by determining one or more of: at least one angle at a joint corresponding to a joint location of the at least one joint location of the user; a speed of a joint corresponding to a joint location of the at least one joint location of the user over the second selection of frames 122.

The classification model 112 outputs a classified activity. A classified activity is a predefined activity which has an associated template. An associated template comprises at least one correct parameter of at least one joint of the template wherein the at least one correct parameter of at least one joint of the template corresponds to an actual parameter of the at least one joint of the user, wherein a corresponding parameter refers to the same metric, such as the correct wrist joint location of the template and the actual wrist joint location of the user.

In various examples, a template associated with a classified activity is predefined by: video recording the classified activity, which is predefined, during correct performance of the classified activity by a user; using a human-pose estimation model to obtain from the video recording at least one joint location of the user over the duration of the classified activity; and generating a template comprising at least one correct parameter of the at least one joint corresponding to the at least one joint location of the user, over the duration of the classified activity. In various examples, the video recording of the classified activity depicts at least a portion of the user. In various examples, the template is an array of the at least one correct parameter of the at least one joint over the course of the classified activity. In various examples, the template is an array of the at least one correct parameter of the at least one joint over each of a plurality of frames corresponding to a plurality of image frames comprised in the video recording of the classified activity. In various examples, the template comprises time stamps of each frame of the plurality of frames. In various examples, the user that performs the classified activity correctly is one or more of: a healthcare professional; a physiotherapist; an instructor; a different user to the user that is depicted in the video stream received by the method 100.

Using the classified activity that is output by the classification model 112, block 114 comprises retrieving a template corresponding to the classified activity. In various examples, the template is stored in one of: a cloud computing environment; the memory of a device which implements the method 100; an external device accessed by the method 100.

Once the template corresponding to the classified activity has been retrieved, a score indicating the quality of the performance of the classified activity is calculated, from the difference between the at least one correct parameter of the at least one joint defined by the template and at least one corresponding actual parameter of the at least one joint of the user over the second selection of frames 122 which are image frames. In various examples, the at least one correct parameter of the at least one joint defined by the template and the corresponding actual parameter of the at least one joint of the user are parameters at the same time relative to the start of the classified activity, such as three, four, ten or more seconds after the start of the activity. In various examples, the at least one correct parameter and the corresponding actual parameter are parameters at the same stage of the classified activity, such as the same movement of the user, which, in various examples, is determined by recognising a movement of the user based on at least one rule implemented on the at least one joint location of the user and the at least one joint location of the template.

A correct parameter and a corresponding actual parameter refers to parameters of the same joint reflecting the same metric, such as a correct wrist joint location relative to the elbow joint of the template and the actual wrist joint location relative to the elbow joint of the user.

In various examples, the at least one actual parameter of the at least one joint of the user depicted in the received video stream 106 and the at least one correct parameter of the at least one joint defined by the template comprise one or more of: an angle at any of the at least one joint; a speed of any of the at least one joint; a relative location of any of the at least one joint.

The quality of the performance of the classified activity refers to how similar a user activity which is classified as the classified activity by the classification model 112 is to the template associated with the classified activity.

In various examples, data output by the method 100 is stored for access and offline evaluation by a healthcare professional. In various examples, only the correct and corresponding actual parameters of the at least one joint over the second selection of frames 122 and the score indicating the quality of the performance of the classified activity by the user are stored for secure access and offline evaluation by a healthcare professional; as such, the private information of the user is made more secure. In various examples, the received video stream 106 is discarded once it is no longer used in the method 100. In various examples, each image frame of the received video stream 106 is discarded once it is no longer used in the method 100.

The calculation of the score will be elaborated on further below.

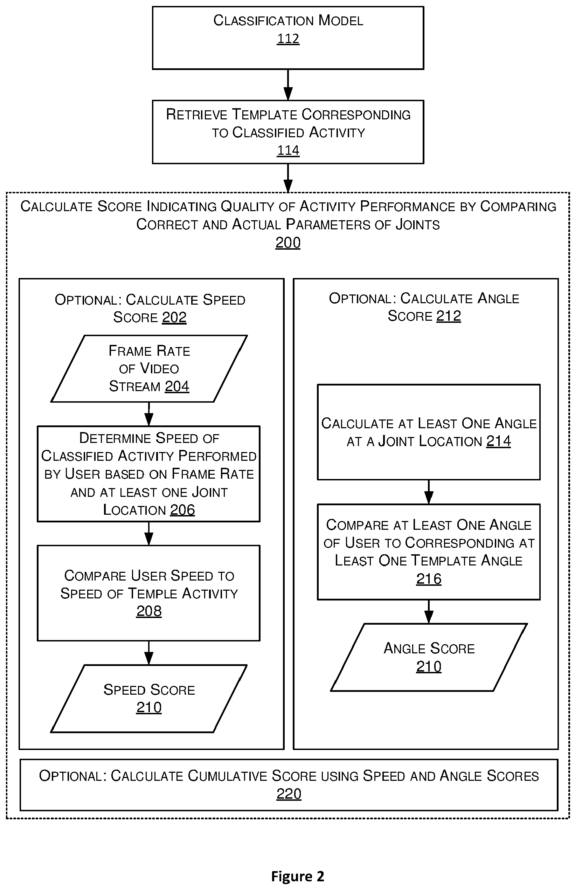

FIG. 2 is a flow diagram illustrating the calculation of the score indicating the quality of the performance of the classified activity.

Blocks 112 and 114 replicate the classification model 112 and the retrieval of a template corresponding to the classified activity 114 as described in FIG. 1. Block 200 elaborates upon the calculation of the score.

The score is calculated from the difference between the at least one correct parameter of the at least one joint defined by the template and at least one corresponding actual parameter of the at least one joint of the user over the second selection of image frames. In various examples, the template is defined such that it defines correct values of only parameters that correspond to the actual parameters of the at least one joint of the user, and correct values of parameters for only joints that correspond to the at least one joint of the user.

In various examples, the score is calculated by calculating the numerical difference between at least one pair of correct and actual parameters of the at least one joint of the user. In various examples, the numerical difference between at least one pair of correct and actual parameters of the at least one joint of the user is normalised to compute the score. It should be appreciated that there are numerous methods of computing the score in a way that indicates the similarity of the actual parameters of the at least one joint of the user and the corresponding correct parameters of the template.

In various examples, calculating the score indicating the quality of the performance of the classified activity 200 comprises calculating a speed score 202. In various examples, the speed score is calculated by: obtaining 204 the frame rate of the received video stream 106, determining a speed of the classified activity 206 performed by the user from the frame rate of the received video stream and the at least one joint location of the user output by the human-pose estimation model during the classified activity; and calculating a speed score 210 indicating the similarity between the speed of the classified activity performed by the user and a speed of the activity defined by the template by comparing the speed of the classified activity performed by the user and a speed of the activity defined by the template 208.

In various examples, the speed of the classified activity performed by the user is determined by calculating the speed of at least one joint of the joints corresponding to the at least one joint location output by the human-pose estimation model during the classified activity. In various examples, 'during the classified activity' refers to 'over the second selection of frames 122'. In various examples, the speed of the classified activity performed by the user is determined by averaging the calculated speed of at least two joints of the joints corresponding to the at least one joint location output by the human-pose estimation model during the classified activity.

In various examples, an individual speed score is calculated for each of at least one joint of joints corresponding to the at least one joint location output by the human-pose estimation model during the classified activity. In various examples, an overall speed score is calculated by averaging all individual speed scores. In various examples, a speed score is calculated by adding the differences in speed between correct and actual speeds of each joint across all joints of the at least one joint of the user.

In various examples, a speed and/or intensity are determined through the same method as the speed as described above, and used to calculate a speed and/or intensity score. Intensity, in various examples, refers to the number of repetitions of a specific movement per second, and is calculated using the location of at least one joint and the frame rate of the received video stream.

In various examples, calculating the score indicating the quality of the performance of the classified activity 200 comprises calculating an angle score 212. In various examples, calculating an angle score 212 comprises: calculating at least one angle at a joint location 214 of the plurality of joint locations of the user during the classified activity; and calculating a score 218 indicating the similarity between the at least one angle at a joint location of the user and a corresponding angle defined by the template by comparing at least one angle at a joint of the user and a corresponding angle the template 216.

In various examples, the angle at a joint location is calculated by using trigonometric techniques and the joint locations of two joints additional to the joint location at which the angle is calculated, such as using a shoulder and wrist joint location in addition to an elbow joint location to calculate an angle at the elbow joint location. In various examples, with three joint locations, a triangle with known side lengths is used to find the angle of the central joint location through a cosine rule.

In various examples, an individual angle score is calculated for each of at least one joint of joints corresponding to the at least one joint location output by the human-pose estimation model during the classified activity. In various examples, an overall angle score is calculated by averaging all individual angle scores. In various examples, an angle score is calculated by adding the differences in angle between correct and actual angles at each joint across all joints of the at least one joint of the user.

In various examples, calculating the score indicating the quality of the performance of the classified activity 200 comprises calculating a cumulative score 220 using both a speed score 202 and an angle score 212. In various examples, calculating a cumulative score 220 consists of averaging a speed score 202 and an angle score 212. In various examples, calculating a cumulative score 220 consists of summing a speed score 202 and an angle score 212. It should be appreciated that there are numerous methods that could be chosen to calculating the scores outlined herein, and that such methods may be substituted for the specific examples described whilst still enabling the functioning of the claimed invention.

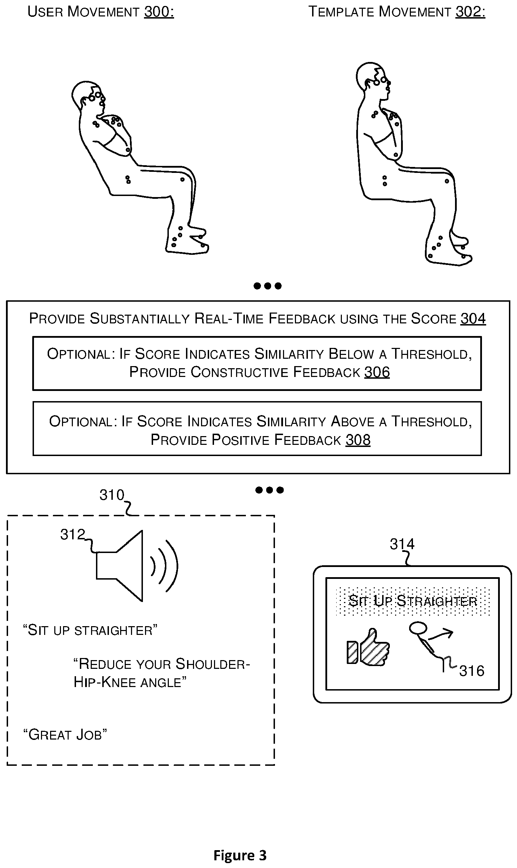

FIG. 3 illustrates the provision of substantially real-time feedback to the user, in various examples. Drawing 300 shows an exemplary frame from a received video stream 106 which is included in the second selection of frames 122, meaning that the exemplary frame is during an activity to be classified by the classification model 112. Drawing 300 represents a frame of a user movement. Drawing 302 shows a representation of a template associated with the classified activity output by the classification model 112 when the activity including frame 300 was input, wherein the representation 302 represents the template at the same stage in the activity as the user in frame 300. As such, drawings 300 and 302 represent the actual and correct parameters of the joints of a user.

The score indicating the quality of the performance of the classified activity by the user would, in various examples, comprise a low score for the angle at the hip of the user movement 300 which indicates that it is different beyond a threshold amount from the correct angle at the hip of the template representation 302, and a high score for the relative joint location between the hip and the knee joint of the user movement 300 and the correct relative joint location between the hip and the knee joint of the template representation 302. As such, the score indicating the quality of the performance of the classified activity by the user is calculated to be a value corresponding to average performance.

In various examples, substantially real-time feedback is provided to the user 304, using the score indicating the quality of the performance of the classified activity.

In various examples, if the score indicating the quality of the performance of the classified activity by the user indicates a similarity of the user and template parameters (i.e. actual and correct parameters respectively) that is below a threshold similarity, constructive feedback is provided 306 to the user. In various examples, the threshold for constructive feedback is 55 degrees of angular difference across the knee, hip and elbow joints wherein the score is a summation of the angular difference in degrees across the knee, hip and elbow joints, and wherein a higher score than 55 indicates a low similarity. In various examples, the threshold for constructive feedback is 33 degrees, 70 degrees, or any other value as chosen according to a context of use. In various examples, the threshold for constructive feedback is an average difference of the relative location between the knee and hip joint locations and the relative location between the hip and shoulder joint locations, of 1 metre wherein the score is an average difference in metres of the relative location between the knee and hip joint locations and the relative location between the hip and shoulder joint locations, and wherein a higher score than 1 indicates a low similarity. It should be appreciated that the choice of threshold depends on the context of use of the method 100, and that the choice of threshold may be any metric that indicates a similarity between at least one actual and corresponding correct parameter of at least one joint of the user, and that may be compared to the score.

In various examples, if the score indicating the quality of the performance of the classified activity by the user indicates a similarity of the user and template parameters (i.e. actual and correct parameters respectively) that is above a threshold similarity, positive feedback is provided 308 to the user. In various examples, the threshold similarity for the provision of positive feedback 308 is the same as the threshold for the provision of constructive feedback 306. In various examples, the threshold similarity for the provision of positive feedback 308 is not the same as the threshold for the provision of constructive feedback 306. In various examples, the threshold similarity for the provision of positive feedback 308 is a lower similarity than the threshold for the provision of constructive feedback 306, therefore, in various examples, constructive feedback and positive feedback is provided to the user within a certain range of scores. In various examples, the threshold similarity for the provision of positive feedback 308 is a higher similarity than the threshold for the provision of constructive feedback 306.

In various examples, positive and/or constructive feedback 310 are provided via an audio signal. In various examples, the audio signal is generated by a speaker 312 within the device that implements the method 100. In various examples, the audio signal is generated by the method 100 and subsequently sent to a speaker 312 for emission. In various examples, positive feedback, which is defined herein as feedback that compliments the user's attempt at an activity, comprises an audio signal of a voice saying 'Great Job'. In various examples, constructive feedback, defined herein as feedback that provides instruction to the user to complete a classified activity more accurately, comprises an audio signal of a voice saying one of: 'sit up straighter; 'reduce your shoulder-hip-knee angle'.

In various examples, the constructive feedback is determined from the actual and correct parameters of at least one joint of the user during a classified activity. In various examples, constructive feedback instructs the user how to perform the classified activity to replicate the activity defined by the template. In various examples, a shoulder-hip-knee angle at the hip joint of the user corresponds to, at the same stage in the classified activity, an actual angle parameter of 111 degrees, and a correct angle parameter from a template of 93 degrees. As such, in various examples, constructive feedback is provided by the user instructing the user to reduce their shoulder-hip-knee angle. In various examples, a user-friendly instruction is provided to the user based on the instruction determined, such as a process in which the instruction to reduce the user's shoulder-hip-knee angle is determined to correspond to an instruction to sit up straighter, which is subsequently provided to the user.

In various examples, positive and/or constructive feedback are provided, additionally or alternatively to provision via an audio signal, by a visual method. In various examples, a display device 314 is one of: associated with but external to; and contained within, the device that implements the method 100. In various examples, positive and/or constructive feedback is provided by a visual method through the display of text feedback on a display device 314. In various examples, positive and/or constructive feedback is provided by a visual method through the display of an element on a display device 314. In various examples, an element is one of: a 'thumbs up' icon indicating the user has performed well; an avatar-like figure representing correct performance overlaid on a representation of the user performance; a diagram showing an outline or other representation of the user in their current position during a classified activity, with visual guidance such as an arrow overlaid which directs the user to perform the classified activity correctly, such as diagram 316.

In various examples, substantially real-time feedback is provided 304 to the user, when the score is calculated in substantially real-time.

In various examples, the video stream is received 106 frame-by-frame in real-time, such as when a camera recording at least a portion of the user transmits recorded frames in substantially real-time to the method 100. The human-pose estimation model 108 processes frame-by-frame input images of a first selection of frames 120 from the real-time video stream to produce at least one joint location from each frame. Where the first selection of frames 120 corresponds to every second, third, fourth or more frames, the human-pose estimation model skips and processes the relevant frames as they are received. The classification model 112 then processes the at least one joint location across a second selection of frames 122 to produce a classified activity. The choice of the second selection of frames 122, in various examples, facilitates the substantially real-time classification of an activity, such as when the second selection of frames 122 is small such that the duration of the second selection of frames 122 reflects a moment in substantially real-time or such that user activity may be classified perceivably in real-time. When the second selection of frames comprises more than a single frame, the at least one joint location from each of the first selection of frames 110 that are processed in substantially real-time are aggregated until the second selection of frames 122 is ready to be processed by the classification model 112. As such, a smaller second selection of frames 122 enables a closer to real-time processing of the classification model 112.

In various examples, the second selection of frames 122 reflects a portion of a single activity. In various examples, the classification model 112 takes into account joint locations corresponding to frames that have been previously input to the model, and refines its classification output as more frames corresponding to the same activity are input, until it is determined that a different activity is defined at least in part by the at least one joint location of the frames that are input.

When the classification model 112 outputs an activity classification in substantially real-time, a template is retrieved corresponding to the classified activity, which enables a score indicating the quality of the performance of the classified activity by the user to be calculated in substantially real-time, and hence the provision of substantially real-time feedback 304.

In various examples, determining that a different activity is defined at least in part by the at least one joint location of the frames that are input to the classification model 112 corresponds to one of: detecting a user gesture from at least one joint location of the frames that are input indicating the start of an activity; detecting a user gesture from at least one joint location of the frames that are input indicating the end of an activity; detecting an audio signal indicating the start of an activity at a time corresponding to a frame of the frames that are input; detecting an audio signal indicating the end of an activity at a time corresponding to a frame of the frames that are input.

The classification model 112, in various examples, is one of: a pre-trained neural network that has undergone supervised training on training data comprising each activity of a plurality of classified activities defined at least in part by at least one joint location, such that the neural network, once trained classifies a user activity defined at least in part by at least one joint location as one of the plurality of classified activities; a neural network that is trained on training data comprising each activity of a plurality of classified activities defined at least in part by at least one joint location, such that the neural network, once trained, classifies a user activity defined at least in part by at least one joint location as one of the plurality of classified activities; at least one rule defining when an activity defined at least in part by at least one joint location should be classified as a specific classified activity of the plurality of classified activities.

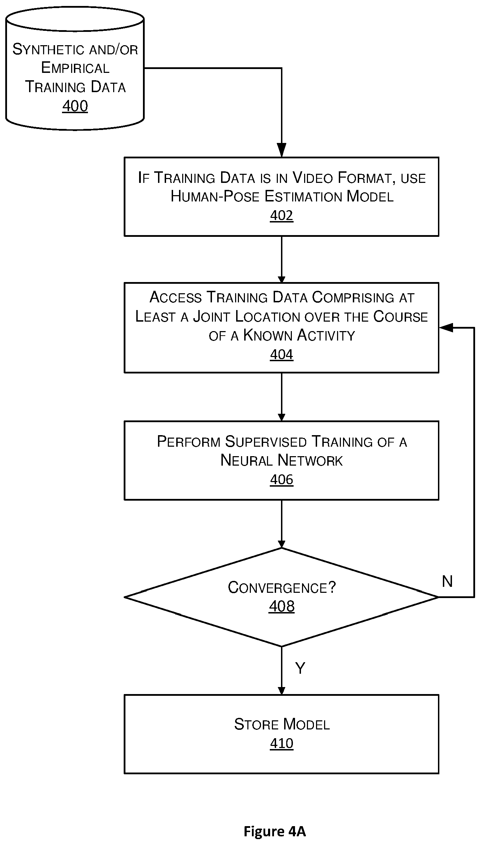

FIG. 4A is a flow chart illustrating the training of a neural network to classify a user activity defined at least in part by at least one joint location as one of a plurality of classified activities. Such a neural network, once trained, is in various examples, the classification model 112 as described herein.

Firstly, training data 400 is received or accessed. Such training data is, in various examples, synthetic and/or empirical. Synthetic training data, in various examples, comprises a set of generated images of an avatar performing a known activity. A known activity classified by the classification model 112 is referred to herein as a classified activity. In various examples, synthetic training data is an array of at least one parameter of at least one joint over the duration of a known activity as defined by a creator of the synthetic training data. In various examples, the at least one parameter of at least one joint is one or more of: a relative joint location; a joint location; an angle at a joint; a speed of a joint over the duration of the known activity. In various examples, empirical training data comprises a set of images or frames of a video stream depicting at least a portion of a user during the performing of a known activity by the user. In various examples, empirical training data comprises an array of at least one parameter of at least one joint of a user over the duration of a known activity performed by the user which, in various examples, is obtained by a human-pose estimation model from a plurality of image frames of a user performing the known activity.

Where training data is in video or image format and depicts at least a portion of a user, in various examples, a human-pose estimation model 402 is used to obtain at least one joint location of the user over the duration of the training data, so as to produce training data comprising an activity defined at least in part by at least a joint location over the course of a known activity 404. In various examples, the training data comprises an activity defined by at least one joint location over the course of a known activity and at least one additional parameter of at least one joint, wherein the at least one additional parameter of at least one joint is, in various examples, one or more of: a relative joint location; a joint location; an angle at a joint; a speed of a joint over the duration of the known activity.

A neural network is then trained, via supervised training 406, on accessed training data comprising training examples, each comprising at least a joint location over the course of a known activity 404, to classify an activity defined at least in part by at least one joint location as one of a plurality of known activities. Supervised training is well-known, and comprises processing individual training examples, in the present case individual activities defined at least in part by at least one joint location of a user over the duration of a known activity, through a neural network to obtain predictions, in our case a classification of the activity of the user as one of a plurality of classified activities. For each prediction there is a ground truth value known from the training example. An error or loss between the prediction and corresponding ground truth value is computed and used to determine how to update weights of the neural network so as to try to reduce the error. Supervised training is performed using a loss function, with the aim of optimising the weights of the neural network so as to minimise the loss function. There are many choices of loss function, and the accuracy of the neural network in making predictions depends on the choice of such a loss function in the context of the training data.

Training examples of the training data 400 are used to perform blocks 402-406 until convergence 408, at which point the trained neural network model is stored 410. Convergence 408, in various examples, represents the weights of the neural network reaching a steady state and not substantially changing. Alternatively, in various examples, convergence 408 represents the point at which the loss function does not decrease substantially further or where a specified number of training examples have been processed. The choice of convergence metric is variable and depends on the context of use of the neural network, alongside the desired accuracy.

Alternatively, the classification model 112 in various examples comprises at least one rule defining when an activity defined at least in part by at least one joint location should be classified as a specific classified activity of the plurality of classified activities. In various examples, the at least one rule defines a condition corresponding to a relative location of a joint, such as when a wrist joint location is higher than a shoulder joint location for more than three seconds, which is determined by comparing y-coordinate locations of a wrist joint and a shoulder joint over frames corresponding to a duration of three seconds. In various examples, if the wrist joint location is higher than the shoulder joint location for more than three seconds over a set of frames classified by the classification model 112, the classification model 112 classifies the activity defined at least in part by at least one joint location over the frames classified by the classification model 112 as a `one arm upwards stretch'. It should be appreciated that the examples described herein are merely illustrative, and that many rules of varying complexity are capable of being implemented in the methods described herein.

As referenced herein, where frames over a specific duration are referred to, these frames are obtained by one of: selecting a group of frames with associated timestamps that differ by at most the specific duration; selecting a group of frames over a duration by using the order of the frames in the received video stream and a frame rate of the video stream. In various examples, the frame rate of the video stream is additionally received by the method 100.

The classification model 112 is used to output a classified activity which is subsequently used to retrieve a template corresponding to the classified activity 114.

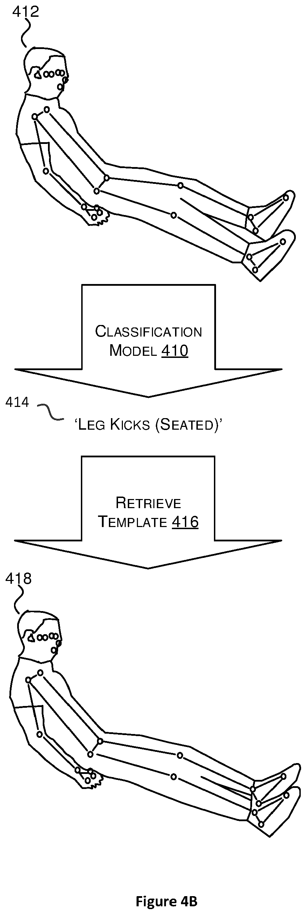

FIG. 4B illustrates the process of classification and template retrieval of the blocks 112-114 of FIG. 1.

Diagram 412 illustrates a set of actual joint locations in an exemplary frame of the second set of frames 122 to be processed by the classification model 112. The set of actual joint locations represented by diagram 412 are comprised in the at least one joint location over the second selection of image frames that at least in part define a user activity, and as such are processed 410 by the classification model during the method 100 in this example. The set of actual joint locations represented by diagram 412 are comprised in the at least one actual parameter of at least one joint of the user over the second selection of image frames. For this example, the classification model 112 outputs a classified activity 414 of 'Leg Kicks (Seated)'. In various examples, the classified activity is a string defining the name of the classified activity. In various examples, the classified activity is an index of the classified activity in an array of classified activities. In various examples, the classified activity is a number or identification string.

Using the classified activity, a template corresponding to the classified activity is then retrieved 114. In the example illustrated by FIG. 4B, a template corresponding to the activity 414 'Leg Kicks (Seated)' is retrieved 416.

Diagram 418 illustrates a set of joint locations in an exemplary frame of the template that is retrieved 416, wherein the exemplary frame of the template corresponds to the same portion of the activity of the user as the exemplary frame of the second set of frames depicted in diagram 416. The set of joint locations represented by diagram 418 are comprised in the at least one correct parameter during the classified activity of at least one joint defined by the template, wherein the correct parameters of the joint locations represented by diagram 418 correspond to the actual parameters of the joint locations represented by diagram 412.

The at least one correct parameter of the at least one joint defined by the template and at least one corresponding actual parameter of the at least one joint of the user over the second selection of image frames are compared to calculate 116 a score indicating the quality of the performance of the classified activity by the user.

Optionally, in various examples, method 100 involves the instruction of the user.

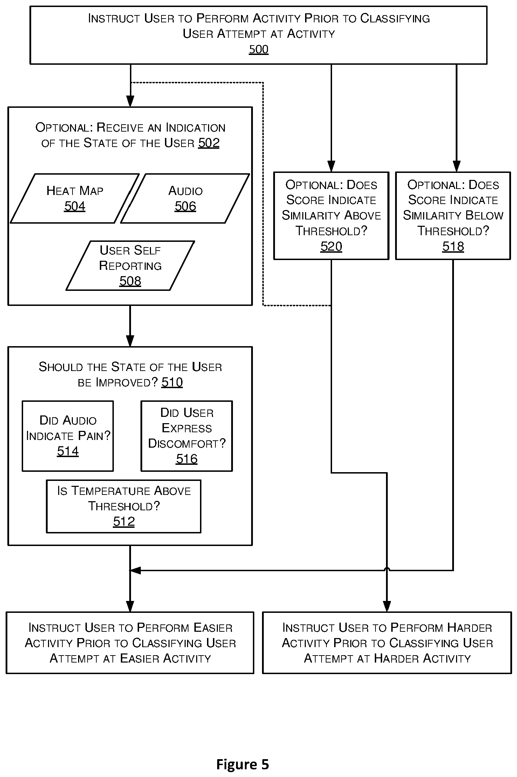

FIG. 5 is a flow chart describing various examples of the provision of instruction to a user that are, in various examples, incorporated into the method 100.

Firstly, in various examples, prior to classifying a user attempt at a first activity via classification model 112, the user is instructed to attempt a first activity. In various examples, the instruction is textual and displayed on a display device, visual and displayed on a display device, or audible and emitted by a speaker, in the same ways as the feedback provided as described in FIG. 3 respectively. In various examples, the instruction is detailed and provides the user with the exact movements to perform in order to attempt a user activity. In various examples, the instruction is simple and comprises the name of the activity to be attempted, such as 'Jumping Jacks, 3 repetitions'.

In various examples, optionally, after at least a portion of the user attempt at the first activity has been classified by the classification model 112, and a score has been calculated 116 indicating a quality of the performance of at least a portion of the first activity, the score is compared to a threshold in the same way as the comparison to a threshold similarity described with respect to FIG. 3.

In various examples, a score indicating a similarity between at least one actual parameter of a user attempt of at least a portion of the first activity and corresponding at least one correct parameter of a template of at least a portion of the first activity below a predefined threshold causes the instruction of the user to perform an easier activity than the first activity, prior to classifying the user attempt at the easier activity. In various examples, the flow chart of FIG. 5 is then repeated, with the first activity of block 500 defined as the easier activity.

In various examples, a score indicating a similarity between at least one actual parameter of a user attempt of at least a portion of the first activity and corresponding at least one correct parameter of a template of at least a portion of the first activity above a threshold triggers an event.

In various examples, the event is the instruction of the user to perform a harder activity than the first activity prior to classifying the user attempt at the harder activity. In various examples, the flow chart of FIG. 5 is then repeated, with the first activity of block 500 defined as the harder activity.

In various examples, alternatively, the event is the receiving of an indication of the state of the user 502. In various examples, an indication of the state of the user 502 is received regardless of any consideration of a score.

In various examples, the indication of the state of the user 502 comprises one or more of: audio 506 from an audio receiver such as a microphone; user self-reporting information 508; a heat map of the user 504 from a heat sensor; a temperature of the user from a temperature sensor. In various examples, the user self-reporting information is obtained by presenting a form and/or display elements on a display device to the user, such as a button element which the user presses to express pain during an activity. In various examples, the display device, microphone, heat sensor, temperature sensor, and any other sensor providing an indication of the state of the user 502 are each independently or cumulatively comprised in any of: the device implementing the method 100; a cloud computing environment; a device external to but associated with the device implementing the method 100. In various examples, the indication of the state of the user that is received 502 is collected independently of the method 100 and is accessed or received during the receiving of an indication of the state of the user 502.

After receiving an indication of the state of the user 502, it is determined whether the state of the user should be improved 510. In various examples, determining whether the state of the user should be improved comprises one or more of: analysing a received audio 506 to determine an indication of pain 514; determining if the user self-reporting information 508 contains an expression of discomfort 516; determining if the temperature of a specific location on a heat map 504 is above a threshold temperature 512. It should be appreciated that there are many possible choices that depend on the context of the user and the implementation of the method described herein as to the indication of the state of the user and how to determine that a state of the user should be improved.

In various examples, a healthcare professional defines that, if the temperature of the user anywhere in their chest is greater than forty degrees centigrade, the state of the user should be improved, as a higher temperature than forty degrees is harmful to the user.

If it is determined that the state of the user should be improved, instruction is, in various examples, provided to the user to perform an easier activity than the first activity prior to classifying the user attempt at the easier activity.

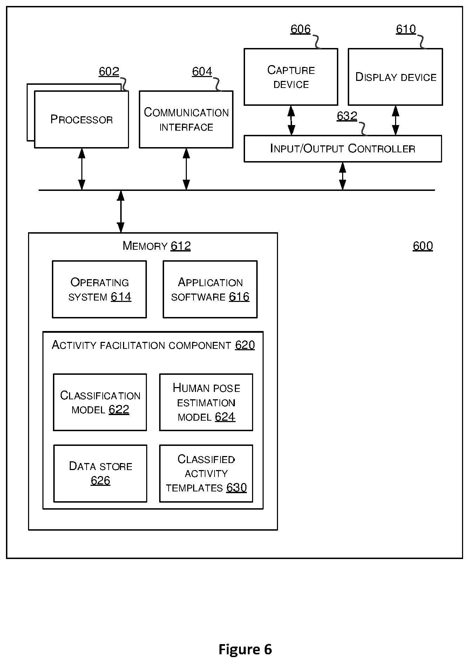

FIG. 6 illustrates various components of an example computing device in which embodiments of an activity monitoring component are implemented in various examples. The computing device is of any suitable form such as a smart phone, a desktop computer, a tablet computer, a laptop computer.

The computing device 600 comprises one or more processors 602 which are microprocessors, controllers or any other suitable type of processors for processing computer executable instructions to control the operation of the device in order to perform the methods of figures 1 to 5. In some examples, for example where a system on a chip architecture is used, the processors 602 include one or more fixed function blocks (also referred to as accelerators) which implement a part of the method of figures 1 to 5 in hardware (rather than software or firmware). That is, the methods described herein are implemented in any one or more of software, firmware, hardware. In the case of software, it may be stored on a computer readable medium. The computing device has an activity facilitation component 620 comprising a data store 626 holding one or more of: image frames of a video stream; training data; model parameters. The activity facilitation component 620 further comprises a classification model 622, human-pose estimation model 624 and classified activity templates 630 which are templates each associated with a different classified activity. Platform software comprising an operating system 614 or any other suitable platform software is provided at the computing-based device to enable application software 616 to be executed on the device. Although the computer storage media (memory 612) is shown within the computing-based device 600 it will be appreciated that the storage is, in some examples, distributed or located remotely and accessed via a network or other communication link (e.g. using communication interface 604).

The computing-based device 600 also optionally comprises an input/output controller 632 arranged to output display information to a display device 610 which may be separate from or integral to the computing-based device 600. The display information may provide a graphical user interface. The input/output controller 632 is also arranged to receive and process input from one or more devices, such as a user input device or capture device 606 (e.g. a mouse, keyboard, camera, microphone or other sensor). In some examples the user input device detects voice input, user gestures or other user actions. In an embodiment the display device 610 also acts as the user input device if it is a touch sensitive display device. The input/output controller 632 outputs data to devices other than the display device in some examples.

Any reference to `an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method for monitoring an activity by a user, comprising:
receiving a video stream comprising a plurality of image frames, the video stream depicting at least a portion of the user;
using a human-pose estimation model to output at least one joint location of the user from each image frame of a first selection of image frames of the plurality of image frames;
using a classification model to classify a user activity defined at least in part by at least one joint location over a second selection of image frames as one of a plurality of classified activities;
retrieving a template corresponding to the classified activity, wherein the template defines at least one correct parameter during the classified activity of at least one joint corresponding to the at least one joint location output by the human-pose estimation model; and
calculating a score indicating the quality of the performance of the classified activity by the user, wherein the quality of the performance of the classified activity is determined from the difference between the at least one correct parameter of the at least one joint defined by the template and at least one corresponding actual parameter of the at least one joint of the user over the second selection of image frames.

2. The method of claim 1, wherein the classification model is a neural network that is trained on training data comprising each activity of the plurality of classified activities, wherein each activity of the plurality of classified activities is defined at least in part by at least one joint location, such that that the neural network, once trained, classifies a user activity defined at least in part by at least one joint location as one of the plurality of classified activities.

3. The method of any preceding claim, wherein the second selection of image frames is one of: the first selection of image frames; a selection of image frames between the detection of a first user gesture from the at least one joint location of the user indicating the start of an activity and a second user gesture from the at least one joint location of the user indicating the end of an activity; a selection of image frames corresponding to times between a time of detection of a first audio signal indicating the start of an activity and a time of detection of a second audio signal indicating the end of an activity.

4. The method of any preceding claim, wherein calculating the score indicating the quality of the performance of the classified activity comprises:
obtaining the frame rate of the received video stream;
determining a speed or intensity of the classified activity performed by the user from the frame rate of the received video stream and the at least one joint location of the user output by the human-pose estimation model during the classified activity; and
calculating a score indicating the similarity between the speed or intensity of the classified activity performed by the user and a speed or intensity of the activity defined by the template.

5. The method of any preceding claim, wherein the at least one joint location of the user is a plurality of joint locations of the user, and wherein calculating the score indicating the quality of the performance of the classified activity comprises:
calculating at least one angle at a joint location of the plurality of joint locations of the user during the classified activity; and
calculating a score indicating the similarity between the at least one angle at a joint location of the user and a corresponding angle defined by the template.

6. The method of any preceding claim, the method further comprising using the score to provide substantially real-time feedback to the user instructing the user how to perform the classified activity to replicate the activity defined by the template.

7. The method of any preceding claim, wherein the user is a first user, wherein the at least one classified activity and the corresponding template are predefined, and wherein predefining the corresponding template comprises, for each of the at least one classified activity:
video recording the classified activity during correct performance of the classified activity by a second user;
using a human-pose estimation model to obtain from the video recording at least one joint location of the second user over the duration of the classified activity; and
generating a template comprising at least one correct parameter of the at least one joint corresponding to the at least one joint location of the second user, over the duration of the classified activity.

8. The method of any preceding claim, wherein the at least one actual parameter of the at least one joint of the user and the at least one correct parameter of the at least one joint defined by the template comprise one or more of: an angle at any of the at least one joint; a speed of any of the least one joint; a relative location of any of the at least one joint.

9. The method of any preceding claim, wherein the classification model is one of:
a neural network that has undergone supervised training on training data comprising each activity of the plurality of classified activities, wherein each activity of the plurality of classified activities is defined at least in part by at least one joint location, such that that the neural network, once trained, classifies a user activity defined at least in part by at least one joint location as one of the plurality of classified activities;
at least one rule defining when an activity defined at least in part by at least one joint location should be classified as a specific classified activity of the plurality of classified activities.

10. The method of any preceding claim, the method further comprising:
providing instruction to the user to attempt a first activity prior to using the classification model during a user attempt of the first activity;
after obtaining the score, providing instruction to the user to attempt a second activity, wherein the second activity has an increased difficulty compared to the first activity where the score indicates a difference between the correct and corresponding actual parameters that is below a predefined threshold, and wherein the second activity has a decreased difficulty where the score indicates a difference between the correct and corresponding actual parameters that is above a predefined threshold.

11. The method of any preceding claim, the method further comprising:
providing instruction to the user to attempt a first activity prior to using the classification model during a user attempt of the first activity;
receiving an indication of the state of the user; and
providing instruction to the user to attempt a second activity with a decreased difficulty compared to the first activity where it is determined that the state of the user should be improved.

12. The method of claim 11, wherein the indication of the state of the user comprises one or more of: audio in which the user expresses pain; audio in which the user expresses discomfort; user self-reporting information in which the user expresses pain; user self-reporting information in which the user expresses discomfort; a heat map of the user from a heat sensor; the temperature of the user from a temperature sensor.

13. The method of any preceding claim, the method further comprising storing only the correct and corresponding actual parameters of the at least one joint and the score indicating the quality of the performance of the classified activity by the user for secure access and offline evaluation by a healthcare professional, wherein the received video stream is discarded once it is no longer used in the method.

14. An apparatus for monitoring an activity by a user, the apparatus comprising:
at least one processor;
at least one memory storing instructions that, when executed by the at least one processor, perform a method for monitoring an activity by a user, comprising:
receiving a video stream comprising a plurality of image frames, the video stream depicting at least a portion of the user;
using a human-pose estimation model to output at least one joint location of the user from each image frame of a first selection of image frames of the plurality of image frames;
using a classification model to classify a user activity defined at least in part by at least one joint location over a second selection of image frames as one of a plurality of classified activities;
retrieving a template corresponding to the classified activity, wherein the template defines correct parameters during the classified activity of at least one joint corresponding to the at least one joint location output by the human-pose estimation model; and
calculating a score indicating the quality of the performance of the classified activity by the user, wherein the quality of the performance of the classified activity is determined from the difference between the correct parameters of the at least one joint defined by the template and corresponding actual parameters of the at least one joint of the user.

15. At least one computer-readable media having computer-executable instructions, which when executed, perform the method of any one of the claims 1 to 13.
